# EUROPEAN PATENT SPECIFICATION

(11) **EP 0 736 710 B1**
(45) Date of publication and mention of the grant of the patent: **28.07.2004**
(21) Application number: 95935565.2
(22) Date of filing: 23.10.1995
(51) Int. Cl.: F16J 15/10, C09K 3/10, C08J 9/36

(54) **GASKET FOR SANITARY PIPING AND PRODUCTION METHOD THEREFOR**
ABDICHTUNG FÜR SANITÄRE ROHRLEITUNG UND VERFAHREN ZUR HERSTELLUNG
JOINT D'ETANCHEITE POUR CONDUITE SANITAIRE ET PROCEDE DE PRODUCTION DE CE JOINT

(30) Priority: 24.10.1994 JP 25782394
(43) Date of publication of application: 09.10.1996
(73) Proprietor: NIPPON PILLAR PACKING CO., LTD., Osaka-shi, Osaka 532 (JP)
(72) Inventor: ABE, Makoto, Itami-shi Hyogo 664 (JP); WADA, Katsuo, Kawanishi-shi Hyogo 666 (JP); MIYOSHI, Takeshi Nippon Pillar Packing Co., Ltd., Sanda-shi Hyogo 669-13 (JP); TANIMURA, Tosiyasu Nippon Pillar Packing Co., Ltd., Fukuchiyama-shi Kyoto 620 (JP); AKAI, Tetsuya Nippon Pillar Packing Co., Ltd., Fukuchiyama-shi Kyoto 620 (JP)
(74) Representative: Howson, Richard G.B.
(86) International application number: PCT/JP1995/002195
(87) International publication number: WO 1996/012903

(56) References cited:
- JP-A- 4 083 977
- JP-A- 4 331 876
- JP-A- 59 204 626
- JP-A- 61 141 781
- JP-U- 53 130 684

## Description

The present invention relates to a gasket for sanitary piping composed of porous polytetrafluoroethylene used in a joint area of sanitary piping in manufacturing equipment of medicines, foods and others, and its manufacturing method.

The joint structure of sanitary piping is generally constituted such that coupling ferrules, or confronting piping end flanges, are connected by a clamp band with the gasket for sanitary piping being pressed, and the specification of the joint structure including such gasket for sanitary piping is prescribed by the International Standardization Organization in ISO-2852.

Known gaskets for sanitary piping include, generally, annular gaskets made of silicone rubber or other rubber, and annular gasket made of polytetrafluoroethylene, having annular protrusions projecting concentrically on both sides for engagement with annular recesses formed for positioning purposes on the confronting surfaces of the ferrules.

However, rubber gaskets are not suited to sanitary piping where a high degree of cleanliness is required because plasticizers are likely to exude in a long course of use. Incidentally, the sanitary piping is recently subjected to steam sterilization treatment more frequently, and the steam sterilization treatment temperature tends to be higher. When steam sterilization treatment is done frequently in high temperature conditions, the rubber gasket deteriorates relatively in a short period, and deterioration leads to lowering of elasticity (becoming stiff), formation of crack, surface peeling, and drop of sealing function. Thus, the rubber gasket has its problems in cleanliness and durability, and is not suited as gasket for sanitary piping.

On the other hand, owing to the properties of polytetrafluoroethylene, the polytetrafluoroethylene gasket is free from such problems, but, to the contrary, is stiff and is hence inferior in flexibility, affinity and restoration. Therefore, to exhibit a specific sealing function, an extremely large tightening torque is needed, and frequent retightening is necessary, and it is difficult to recover the sealing function by repeated retightening.

As means for solving such problems of silicone rubber gasket and polytetrafluoroethylene gasket, lately is proposed an annular gasket for sanitary piping (hereinafter called "conventional gasket") composed of porous polytetrafluoroethylene, that is, made of polytetrafluoroethylene made porous by drawing (for example, set JP-A-5-99343).

Such conventional gasket is made of porous polytetrafluoroethylene which is of a soft material, and hence possesses an excellent flexibility, affinity and restoration not obtained in the usual polytetrafluorcethylene gasket, while maintaining the intrinsic properties of polytetrafluoroethylene such as durability, cleanliness, and resistance to chemicals, and may be used satisfactorily in severe sealing conditions in sanitary piping.

In the conventional gasket, however, since it is made of porous material, the sealed fluid may permeate from the inner circumferential parts of the gasket which directly contact with the sealed fluid, thereby causing a so-called osmotic leak.

Such osmotic leak is not significant when the sealed fluid is liquid, but is a serious problem when the gasket is used as gas seal or vacuum seal.

To prevent osmotic leak, it may be considered to heighten the forming density of gasket, but heightening of forming density has its own limit, and it is impossible to prevent osmotic leak completely. Or, when the forming density is heightened more than necessary, the intrinsic properties (flexibility, etc) of the porous polytetrafluoroethylene are sacrificed, and the significance of using porous polytetrafluoroethylene as constituent material is lost.

In the conventional gasket, moreover, since its constituent material, i.e. the porous polytetrafluoroethylene, cannot be fused and formed in a die unlike silicone rubber or the like, at the present there is no other method than compressing and forming a sheet material into a specific annular plate form by using a die. Therefore, as far as the gasket for sanitary piping is not, generally, flat on both surfaces, but is in an annular plate form with uneven thickness having projecting protrusions on both surfaces as mentioned above, it is impossible to have a uniform density in the entire gasket including protrusions by compressive form with a die, and in particular the portions forming protrusions tends to be lower in density than in other parts. Thus, in the conventional gasket made of porous polytetrafluoroethylene having protrusions on both sides, the gasket density is uneven locally, and the sealed fluid may permeate and stay in low density portions (in particular, protrusion areas). This osmotic fluid may degenerate in a long course of use, and may lead to formation of pyrogen as the heat generating substance, which may induce undesired problems from the sanitary viewpoint in the manufacturing process of medicines and foods. Thus in the conventional gasket which is an annular gasket made of porous polytetrafluoroethylene, the osmotic leak is an inherent defect characteristic of the material, and hence its applications are substantially limited.

JP-A-61-141781 discloses an annular gasket having two opposite, annular faces and a central circular hole. The gasket of JP-A-61-141781 is formed of a thermoplastic fibre material such as an ethylene/tetrafluroethylene copolymer. An annulus comprising a non-liquid-permeable thermoplastic film is placed on each face of the gasket such that the two annuli are substantially aligned with one another. The gasket and film annuli are then treated by heating such that the film annuli and gasket fuse to form a unitary body. In particular, the film annuli and gasket are treated such that in an annular zone between the two annuli, the fibrous thermoplastic material of the gasket is completely solidified through the thickness of the gasket. Juxtaposed each circumferential of each film annulus, the annuli and gasket may be treated such that only the surface of the gasket is fused.

It is an object of the invention to present a gasket for sanitary piping capable of securely preventing osmotic leak which is an inherent material defect in the gasket made of porous polytetrafluoroethylene, without sacrificing the characteristics and significance of using the porous polytetrafluoroethylene as the constituent material.

According to an aspect of the present invention therefore, there is provided an annular gasket for sanitary piping as claimed in claim 1 below. The fused, solidified layer may be either uniform in thickness or non-uniform. For example, it may be thick in the middle portion in the direction of thickness of the gasket, and thin in the both end portions.

In this way, when a pore-free fused solidified layer is formed in the inner circumferential parts of the gasket directly contacting with the sealed fluid, osmotic leak from this area is prevented securely although the gasket is composed of a porous material. What is more, this fused solidified layer is formed only at the inner circumferential surface layer of the gasket, and the intrinsic properties of the porous polytetrafluoroethylene such as flexibility and affinity are not sacrificed at all by the gasket as a whole, and the significance of using it as the gasket constituent material is not lost.

Therefore, according to the gasket for sanitary piping of the invention, without sacrificing the original characteristics of the gasket made of porous polytetrafluoroethylene, its inherent defect of osmotic leak from the inner circumferential parts of the gasket can be securely prevented, and hence the sealing characteristics (gas sealing property, airtight holding property, etc.) of the gasket of porous polytetrafluoroethylene can be substantially enhanced as compared with those of the conventional gasket, so that the applications of the gasket may be significantly expanded.

It is another object of the invention to present a method of manufacturing a gasket for sanitary piping possessing such structure for preventing osmotic leak. Thus in accordance with another aspect of the present invention, there is provided a method of manufacturing an annular gasket for sanitary piping as claimed in claim 3 below.

In the method of the invention, the annular gasket of porous polytetrafluoroethylene obtained by conventional method is provided with the osmotic leak preventive structure in the following technique.

That is, the surface layer of the inner circumferential parts the gasket directly contacting with the sealed fluid is heated, fused, cooled and solidified to form a pore-free fused solidified layer.

The process of fusing and solidifying such surface layer is done in the condition of 420 to 460°C and 10 to 30 seconds. More specifically, the heating and fusing treatment of the surface layer is done by contacting a heated metal material with the entire surface layer.

Following is a description by way of example only with reference to the accompanying drawings of embodiments of the present invention.

In the drawings:-
Fig. 1 is a perspective cut-away view showing a gasket for sanitary piping of the invention;
Fig. 2 is a longitudinal sectional view showing a sanitary piping joint structure provided with the same gasket; and,
Fig. 3 is a magnified detailed view of essential parts of Fig. 2.

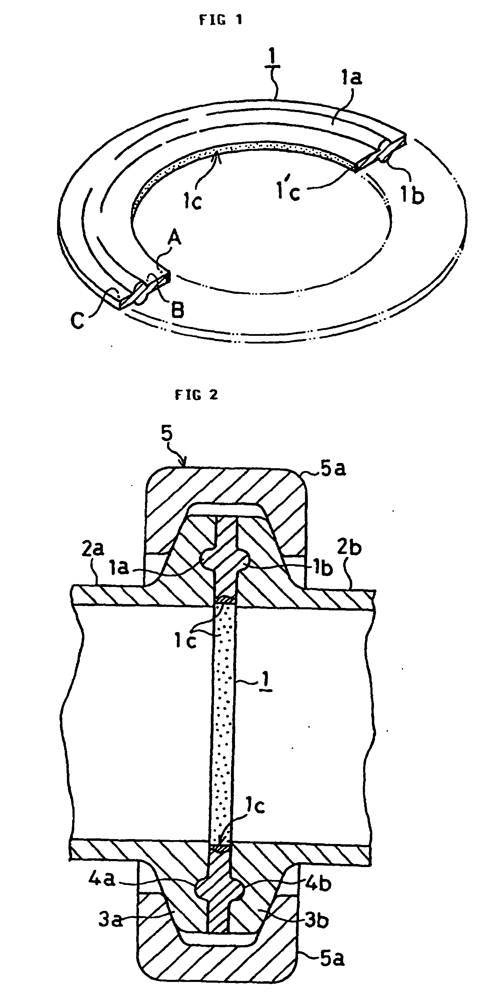

Fig. 1 is a perspective cut-away view showing a preferred embodiment of a gasket for sanitary piping of the invention. The gasket 1 for sanitary piping of the embodiment is obtained by press forming, with use of a die, of an annular material cut out of a sheet material of porous polytetrafluoroethylene, and is in an annular plate form having annular protrusions 1a, 1b on both surfaces. This sheet material of porous polytetrafluoroethylene is made of a raw material of polytetrafluoroethylene, which is pressed by rolls to undergo crystal orientation treatment, and drawn by rubber lined pinch rolls at a draw rate of 110 to 300% at temperature of less than 327°C to have a porosity rate of 40 to 86%.

This gasket 1 is inserted in pressed state between ferrules 3a, 3b formed at ends of sanitary pipings 2a, 2b, and functions to seal the joint portions of the sanitary pipings 2a, 2b.

That is, the gasket 1 is positioned at a specific position between the ferrules 3a, 3b, that is, at a place positioning the gasket concentrically with the pipings 2a, 2b. This positioning is achieved by engaging the protrusions 1a,1b of the gasket 1 with annular recesses 4a, 4b formed in the confronting surfaces of the ferrules 3a, 3b. The ferrules 3a, 3b are tightened together by a clamp band 5, and the gasket 1 is held tightly between the ferrules 3a, 3b. This clamp band 5 is generally in a two-division or three-division structure consisting of two or three arcuate segments 5a... coupled in an annular form, and by contracting the diameter of the annular form by tightening the coupling screw between the segments 5a, 5a, the ferrules 3a, 3b are tightened. The joint structure of such sanitary piping is specified by the International Standardization Organization in ISO-2852 as mentioned at the beginning.

Therefore, by properly setting the surface pressure of the gasket 1 generated by tightening by the ferrules 3a, 3b, that is, the tightening torque of the clamp band 5, the ferrules 3a, 3b are sealed by the gasket 1, and therefore the gasket inner circumferential parts 1c which are not covered by the ferrules 3a, 3b but directly contact with the sealed fluid in the pipings 2a, 2b may permit osmotic leak because the gasket 1 is made of porous polytetrafluoroethylene as mentioned above.

In this embodiment, such osmotic leak is effectively prevented by forming the gasket inner part 1c in the following osmotic leak preventive structure. That is, the surface layer of the entire inner circumferential parts 1c of gasket is formed by a pore-free fused solidified layer 1'c as shown in Fig. 1 to Fig. 3.

The gasket 1 for sanitary piping having such osmotic pressure preventive structure is fabricated by heating and fusing the surface layer of the gasket inner circumferential parts 1c, and cooling and solidifying. Such heat treatment may be done in various techniques, and in this embodiment, considering that the gasket 1 is annular, the fused solidified layer 1'c is formed by using a tubular metal member provided with a heater inside.

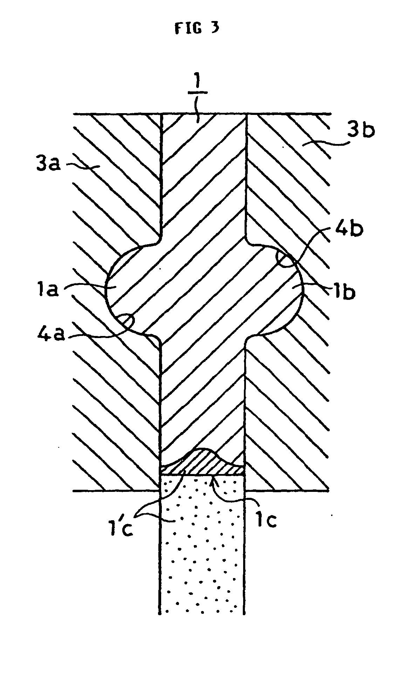

More specifically, this metal member is tubular, having its outside diameter nearly identical with the inside diameter of the gasket 1, and the metal member is heated by the heater to a proper temperature over the melting point of the porous polytetrafluoroethylene, then the gasket 1 is fitted and held on the metal member and the entire circumference of the gasket inner part 1a is permitted to uniformly contact with the outer circumference of the metal member. The surface layer of the gasket inner circumferential parts 1c contacting with the outer circumference of the metal member is simultaneously and uniformly fused on the whole circumference, and heating of the metal member by the heater is removed, and the fused portion is cooled and solidified, so that the surface layer of the gasket inner circumferential parts 1c forms a pore-free fused solidified layer 1'c. Thus formed fused solidified layer 1'c is thick in the middle portion in the direction of thickness of the gasket 1 and thin at both end portions as shown in Fig. 3 (such layer sectional shape is called a mountain shape). The heater should be preferable controllable in temperature.

By thus permitting the surface layer of the gasket inner circumferential parts 1c to form a pore-free fused solidified layer 1'c, if the gasket 1 is made of porous material, osmotic leak from the gasket inner circumferential parts 1c can be effectively prevented by the fused solidified layer 1'c. The fused and solidified surface layer 1'c of the gasket inner part 1c is hardened, but since this fused and solidified layer 1'c is very thin and is formed only in the parts contacting directly with the sealed fluid, the intrinsic characteristics of porous polytetrafluoroethylene (flexibility, affinity, restoration, etc.) of the gasket 1 on the whole are not sacrificed at all by the presence of the fused solidified layer 1'c. In other words, except for the point of prevention of osmotic leak, it has the same functions as the conventional gasket. In particular, if the fused solidified layer 1'c is in the mountain (i.e. bulging in the middle) shape, when the gasket 1 is compressed in the direction of thickness (pressed by the ferrules 2a, 2b), the thin portions at both ends of the fused solidified layer 1'c are deformed relatively easily as compared with the middle thick portion, so that the adverse effects of the presence of the fused solidified layer 1'c on the elastic characteristics of the gasket (flexibility, affinity, etc.) may be sufficiently eliminated.

It has been proven in the following experiments that the gasket 1 for sanitary piping having the surface layer of the gasket inner circumferential parts 1a forming the fused solidified layer 1'c effectively prevents osmotic leak and is excellent in gas sealing capacity and airtight holding property.

That is, in this experiment, a plurality of gaskets I to VI made of porous polytetrafluoroethylene were fabricated in the same conditions, using sheets of porous polytetrafluoroethylene as material. The gaskets I to VI are identical in shape, and in an annular plate shape, in the form of the gasket shape for sanitary piping shown in Fig. 1, measuring 23.2 mm in inside diameter, 50.5 mm in outside diameter, and 2 mm in thickness.

Except for gasket VI, in gaskets I to V, fused solidified layers were formed in the gasket inner circumferential parts in different heat treatment conditions, within the specified range of heat treatment conditions mentioned above.

That is, gasket I was heated for 10 seconds at 420°C, gasket II for 10 seconds at 440°C, gasket III for 20 seconds at 440°, gasket IV for 30 seconds at 440°C, and gasket V for 10 seconds at 460°C, and therefore, fused solidified layers in the mountain shape were formed in the gasket inner circumferential parts by the same method as in the above mentioned embodiment (i.e. using a thin metal cylinder having a temperature controllable heater provided inside). Gasket VI was not heated at all, that is, a conventional gasket without fused solidified layer.

To confirm the sealing properties of the gaskets I to VI, the following experiment was conducted. The test apparatus was similar to the sanitary piping joint structure shown in Fig. 2 in which the pipings 2a, 2b are closed by plugs, and the closed pipings 2a, 2b are sealed by the gasket to form an enclosed space (hereinafter called inspection space). For the convenience of explanation, the members of the test apparatus are identified by the same reference numerals corresponding to the similar members in the sanitary piping joining structure in Fig. 2.

In the first experiment, each one of the gaskets I to VI was pressed and held between the ferrules 1a, 1b in the same manner as in the sanitary piping joint structure shown in Fig. 2, compressed air was supplied and sealed in the inspection space, and the pressure in the inspection space was set at 2.0 kgf/cm², and the pressure in the inspection space was measured in a specific time passage. In the experiment, the tightening torques of the clamp band 5 were 25 kgf.cm an 100 kgf.cm, and the pressure was measured in 1 hour in the former case, and the pressure in 1 hour and the pressure in 18 hours were measured in the latter case. The results are shown in Table 1. In the conventional gasket VI, however, the pressure could not be measured in elapse of 18 hours. It was because the pressure in the inspection space was completely lost before reaching 18 hours.

From the results of the experiment (Table 1), it was confirmed that the pressures in the inspection space were hardly lowered in regard to the gaskets I to V forming fused solidified layers regardless of the tightening torque, and that osmotic leak was effectively prevented. In the conventional gasket VI not forming fused solidified layer, on the other hand, regardless of the tightening torque, the pressure dropped significantly as time passed, and it is understood that osmotic leak occurred. Therefore, by forming the fused solidified layer in the portion contacting with the sealed fluid, it is understood that the gas sealing characteristic of the gasket made of porous polytetrafluoroethylene may be greatly enhanced.

In a second experiment, the inspection space of the test apparatus was evacuated by a vacuum pump to a degree of vacuum of -700 mmHg, and, in the gaskets I to VI, the pressure in the inspection space was measured in 1 hour at the tightening torque of 25 kgf.cm, and the pressure in the inspection space in 1 hour and the pressure in the inspection space in 2 hours were measured at the tightening torque of 100 kgf.cm. The results are shown in Table 2. In the conventional gasket VI, the measurement in 2 hours is not recorded, which is because the vacuum state was completely lost before reaching 2 hours.

From the results of experiment (Table 2), in the gaskets I to V forming fused solidified layers, it has been confirmed that a perfect airtight holding function is exhibited at a large tightening torque (100 kgf.cm), so that the osmotic leak can be prevented securely. In the case of smaller tightening torque (25 kgf.cm), too, the osmotic leak is effectively prevented, and it is understood that an excellent airtight holding function is exhibited. In the conventional gasket VI, on the other hand, if the tightening torque is increased, airtight holding function is not enough and osmotic leak is significant. It is hence understood that, by forming the fused solidified layer in the portions contacting with the sealed fluid, the airtight holding property of the gasket made of porous polytetrafluoroethylene may be greatly enhanced.

In a third experiment, in the gaskets I to V, steam sterilization of pipings 2a, 2b was repeated three times, and the pressure was measured the same as in the foregoing experiments. The results are shown in Table 3.

As understood from the results of experiment (Table 3), in the gaskets I to V forming fused solidified layers, it may be understood that excellent gas sealing performance and airtight holding property are exhibited even in such severe conditions. Therefore, by applying the osmotic leak preventive structure of the invention, it is understood that the gasket made of porous polytetrafluoroethylene may be applied in the sanitary piping in which steam sterilization treatment is a statutory obligation.

In a fourth experiment, in the gaskets I to V, the test apparatus was immersed in a water tank with the piping axial line being in horizontal state, nitrogen gas was supplied into the inspection space, and the inspection space was held always at a specific pressure, and bubbles rising up to the water surface were captured by a measuring cylinder, and hence the bubble amount, or the nitrogen gas leak amount was measured. In this experiment, the tightening torque was 25 kgf.cm and 40 kgf.cm, and the leak amount was measured at the inspection space pressure of 2 kgf/cm², the leak amount was measured at the inspection space pressure of 3 kgf/cm², and the leak amount was measured at the inspection space pressure of 4 kgf/cm². In gasket III, the leak amount was also measured at the tightening torque of 100 kgf.cm and the inspection space pressure of 4 kgf/cm². Of the gasket III, pieces subjected to experiment at tightening torque of 25 kgf.cm were collected from the test apparatus after the experiment, and the collected gaskets (called gaskets iii) were put back to the test apparatus at tightening torque of 100 kfg.cm, and the leak at the inspection space pressure of 4 kgf/cm² was measured in the same manner again. The results are shown in Table 4.

As understood from the results of experiment (Table 4), in the gaskets I to V forming fused solidified layers, regardless of the tightening torque and sealed fluid pressure, it was further confirmed that osmotic leak can be prevented securely. In the case of gaskets iii used again, a sufficient sealing function was confirmed, and it is understood that forming of fused solidified layer has no adverse effect whatsoever on the intrinsic properties such as restoration property of the gasket of porous polytetrafluoroethylene.

Furthermore, to study the effects of formation of fused solidified layer on the flexibility of gasket, the gasket hardness was measured in the gaskets I to VI.

In this hardness measurement, using durometer hardness gauge (type C) of ASKER, measurement was made at three points on the radial line of each gasket. That is, at the inner circumferential end position forming the fused solidified layer (position A in Fig. 1), the position near the protrusion (position B in Fig. 1), and the outer circumferential end position (position C in Fig. 1) were measured. To measure the hardness, protrusions 1a, 1b of the gasket were cut off in advance by a cutter knife.

Results of hardness measurement are shown in Table 5, and the hardness was confirmed to be nearly the same regardless of whether fused solidified layer was formed or not. It is hence understood that forming of the fused solidified layer does not spoil the intrinsic property of flexibility of the gasket of porous polytetrafluoroethylene.

The invention is not limited to the illustrated embodiment alone, but may be properly changed or modified in a range not departing from the true spirit and basic principle of the invention. For example, the gasket density may be set approximately depending on the seal conditions and others in a range not sacrificing the original characteristics of porous polytetrafluoroethylene. The manufacturing method of osmotic leak preventive structure, that is, the technique for forming the fused solidified layer is also arbitrary, and for example, the fused solidified layer may be formed simultaneously when forming the gasket or when forming the gasket material (sheet material etc.).

**〈Table 1〉**

| Gasket | | Initial pressure (compressed air): 2.0 kgf/cm² | | |
|---|---|---|---|---|
| | | Tightening torque 25 kgf·cm | Tightening torque: 100 kgf·cm | |
| No. | Heat treatment condition | Pressure in 1 hour (kgf/cm²) | Pressure in 1 hour (kgf/cm²) | Pressure in 18 hours (kgf/cm²) |
| I | 420°C 10 sec. | 1.90 | 1.98 | 1.78 |
| | | 1.90 | 1.98 | 1.82 |
| II | 440°C 10 sec. | 1.88 | 1.96 | 1.82 |
| | | 1.90 | 1.98 | 1.84 |
| III | 440°C 20 sec. | 1.90 | 1.98 | 1.86 |
| | | 1.90 | 1.98 | 1.86 |
| IV | 440°C 30 sec. | 1.88 | 1.98 | 1.82 |
| | | 1.88 | 1.96 | 1.84 |
| V | 460°C 10 sec. | 1.92 | 1.98 | 1.90 |
| | | 1.90 | 1.98 | 1.90 |
| VI | None | 0.50 | 1.50 | - |

**〈Table 2〉**

| Gasket | | Initial pressure (vacuum): -700 mmgHg | | |
|---|---|---|---|---|
| | | Tightening torque: 25 kgf·cm | Tightening torque: 100 kgf·cm | |
| No. | Heat treatment condition | Pressure in 1 hour (mmHg) | Pressure in 1 hour (mmHg) | Pressure in 2 hours (mmHg) |
| I | 420°C 10 sec. | -680 | -700 | -700 |
| | | -680 | -700 | -700 |
| II | 440°C 10 sec. | -680 | -700 | -700 |
| | | -680 | -700 | -700 |
| III | 440°C 20 sec. | -690 | -700 | -700 |
| | | -690 | -700 | -700 |
| IV | 440°C 30 sec. | -690 | -700 | -700 |
| | | -680 | -700 | -700 |
| V | 460°C 10 sec. | -690 | -700 | -700 |
| | | -690 | -700 | -700 |
| VI | None | -180 | -300 | - |

**〈Table 3〉**

| Gasket | | Tightening torque: 100 kgf·cm (steam sterilization: conducted 3 times) | | | |
|---|---|---|---|---|---|
| | | Initial pressure (compressed air): 2.0 kgf·cm | | Initial pressure (vacuum): -700 mmHg | |
| No. | Heat treatment condition | Pressure in 1 hour (kgf/cm²) | Pressure in 18 hours (kgf/cm²) | Pressure in 1 hour (mmHg) | Pressure in 2 hours (mmHg) |
| I | 420°C 10 sec. | 2.00 | 1.90 | -700 | -700 |
| | | 2.00 | 1.94 | -700 | -700 |
| II | 440°C 10 sec. | 2.00 | 1.96 | -700 | -700 |
| | | 2.00 | 1.96 | -700 | -700 |
| III | 440°C 20 sec. | 2.00 | 1.96 | -700 | -700 |
| | | 2.00 | 1.96 | -700 | -700 |
| IV | 440°C 30 sec. | 2.00 | 1.94 | -700 | -700 |
| | | 2.00 | 1.96 | -700 | -700 |
| V | 460°C 10 sec. | 2.00 | 1.96 | -700 | -700 |
| | | 2.00 | 1.96 | -700 | -700 |

**〈Table 4〉**

| Gasket | | Tightening torque (kgf·cm) | Leak amount (cc/min) | | |
|---|---|---|---|---|---|
| No. | Heat treatment condition | | Sealed gas pressure (nitrogen gas) | | |
| | | | 2 kgf·cm² | 3 kgf·cm² | 4 kgf·cm² |
| I | 420°C 10 sec. | 25 | 1.80 x 10⁻² | 2.50 x 10⁻² | 3.40 x 10⁻² |
| | | 40 | 3.88 x 10⁻³ | 6.22 x 10⁻³ | 7.98 x 10⁻³ |
| II | 440°C 10 sec. | 25 | 1.10 x 10⁻² | 1.40 x 10⁻² | 1.50 x 10⁻² |
| | | 40 | 2.10 x 10⁻² | 3.80 x 10⁻² | 4.90 x 10⁻² |
| III | 440°C 20 sec. | 25 | 3.19 x 10⁻³ | 5.38 x 10⁻³ | 7.13 x 10⁻³ |
| | | | 2.20 x 10⁻³ | 2.69 x 10⁻³ | 4.36 x 10⁻³ |
| | | | 1.28 x 10⁻³ | 1.92 x 10⁻³ | 2.77 x 10⁻³ |
| | | 40 | 4.68 x 10⁻³ | 7.50 x 10⁻³ | 9.26 x 10⁻³ |
| | | | 7.66 x 10⁻³ | 9.52 x 10⁻³ | 1.29 x 10⁻² |
| | | | 6.59 x 10⁻³ | 8.28 x 10⁻³ | 1.11 x 10⁻² |
| | | 100 | - | - | 9.09 x 10⁻⁴ |
| | | | - | - | 1.67 x 10⁻³ |
| iii | 440°C 20 sec. | 100 | - | - | 2.42 x 10⁻³ |
| | | | - | - | 3.56 x 10⁻³ |
| | | | - | - | 2.27 x 10⁻³ |
| IV | 440°C 30 sec. | 25 | 8.33 x 10⁻³ | 1.30 x 10⁻² | 1.50 x 10⁻² |
| | | 40 | 1.00 x 10⁻² | 1.70 x 10⁻² | 2.20 x 10⁻² |
| V | 460°C 10 sec. | 25 | 2.00 x 10⁻² | 3.40 x 10⁻² | 4.40 x 10⁻² |
| | | 40 | 5.42 x 10⁻³ | 9.62 x 10⁻² | 1.20 x 10⁻² |

**〈Table 5〉**

| Gasket | | Gasket hardness | | |
|---|---|---|---|---|
| No. | Heat treatment condition | Position of Measurement | | |
| | | Inner circumferential end position | Protrusion neighboring position | Outer circuferential end position |
| I | 420°C 10 sec. | 93 | 90 | 91 |
| II | 440°C 10 sec. | 94 | 90 | 91 |
| III | 440°C 20 sec. | 94 | 91 | 91 |
| IV | 440°C 30 sec. | 94 | 90 | 91 |
| V | 460°C 10 sec. | 93 | 91 | 92 |
| VI | None | 93 | 91 | 91 |

## Claims

1. An annular gasket (1) for sealing sanitary pipings conveying a fluid, said gasket being made of porous polytetrafluoroethylene and having two opposite annular sides adapted for sealingly contacting the pipings, and an inner circumferential surface (1c) defining an area adapted to contact directly the fluid conveyed, **characterised in that** a thin, pore-free, fused, solidified layer (1'c) is formed at the inner circumferential surface layer of said gasket to prevent osmotic leak of said fluid from said area, said pore-free, fused, solidified layer being formed only at the inner circumferential surface (1c) of the gasket, such that, except at said pore-free, fused, solidified layer, the intrinsic characteristics of the porous polytetrafluoroethylene of the gasket are not sacrificed.

2. An annular gasket as claimed in claim 1, **characterised in that** said fused, solidified layer (1'c) comprises a thickened central portion in the thickness direction of the gasket (1) and thin portions at both ends of the fused, solidified layer towards each side of the gasket, which thickened portion is thickened relative to the thickness of said thin portions, whereby said thin portions can be deformed relatively easily as compared with the thickened portion.

3. A method of manufacturing an annular gasket (1) for sealing sanitary pipings conveying a fluid, said method comprising forming from porous polytetrafluoroethylene an annular gasket having two opposite annular sides adapted for sealingly contacting the pipings, and an inner circumferential surface (1c) defining an area adapted to contact directly the fluid to be conveyed; **characterised by** heating said inner circumferential surface (1c) to a temperature of 420 - 460°C for a period of 10 - 30 seconds by contacting the whole of said inner circumferential surface with a heated metal member, thereby to fuse said inner circumferential surface, and thereafter allowing said inner circumferential surface to cool and solidify to form a thin, pore-free, fused solidified layer (1'c) to prevent osmotic leak of said fluid from said area, whereby, except at said pore-free, fused, solidified layer, the intrinsic characteristics of the porous polytetrafluoroethylene of the gasket are not sacrificed.

## Patentansprüche

1. Ringdichtung (1) zum Abdichten von sanitären Rohrleitungen, die ein Fluid leiten, welche Dichtung aus porösem Polytetrafluoroethylen besteht und zwei entgegengesetzte Ringseiten, die zum abdichtenden Kontakten der Rohrleitungen angepasst sind, und eine Innenumfangsoberfläche (1c) hat, die einen Bereich definiert, der angepasst ist, um direkt das geleitete Fluid zu kontakten, **dadurch gekennzeichnet, dass** eine dünne, porenfreie, verschmolzene, verfestigte Schicht (1'c) an der Innenumfangsoberflächenschicht der Dichtung ausgebildet ist, um ein osmotisches Lecken des Fluids aus dem Bereich zu verhindern, welche porenfreie, verschmolzene, verfestigte Schicht nur an der Innenumfangsoberfläche (1c) der Dichtung ausgebildet ist, so dass mit Ausnahme der porenfreien, verschmolzenen, verfestigten Schicht die intrinsischen Charakteristika des porösen Polytetrafluoroethylens der Dichtung nicht aufgegeben werden.

2. Ringdichtung nach Anspruch 1, **dadurch gekennzeichnet, dass** die verschmolzene, verfestigte Schicht (1'c) einen verdickten Zentralteil in der Dickenrichtung der Dichtung (1) und dünne Teile an beiden Enden der verschmolzenen, verfestigten Schicht zu jeder Seite der Dichtung hin enthält, welcher verdickte Teil relativ zu der Dicke der dünnen Teile verdickt ist, wodurch die dünnen Teile relativ leicht im Vergleich zu dem verdickten Teil deformiert werden können.

3. Verfahren zum Herstellen einer Ringdichtung (1) zum Abdichten von sanitären Rohrleitungen, die ein Fluid leiten, enthaltend, ein Ausbilden einer Ringdichtung aus porösem Polytetrafluoroethylen, mit zwei entgegengesetzten Ringseiten, die zum abdichtenden Kontakten der Rohrleitungen angepasst sind, und eine Innenumfangsfläche (1c), die einen Bereich definiert, der zum direkten Kontakten des zu leitenden Fluids angepasst ist; **gekennzeichnet durch** Erhitzen der Innenumfangsoberfläche (1c) auf eine Temperatur von 420 - 460 °C für eine Dauer von 10 - 30 Sekunden **durch** Kontakten der vollständigen Innenumfangsoberfläche mit einem erhitzten Metallglied, wodurch die Innenumfangsoberfläche verschmolzen wird, und danach ein abkühlen Lassen und verfestigen Lassen der Innenumfangsoberfläche, um eine dünne, porenfreie, verschmolzen verfestigte Schicht (1'c) zu bilden, um ein osmotisches Lecken des Fluids aus dem Bereich zu verhindern, wodurch mit Ausnahme der porenfreien, verschmolzenen, verfestigten Schicht, die intrinsischen Charakteristika des porösen Polytetrafuoroethylens der Dichtung nicht aufgegeben werden.

## Revendications

1. Un joint d'étanchéité annulaire (1) pour rendre étanche des conduites sanitaires transportant un fluide, ledit joint d'étanchéité étant réalisé en polytétrafluoroéthylène poreux et ayant deux côtés annulaires opposés, adaptés pour mettre les conduites en contact étanche, et une surface circonférentielle interne (1c) définissant une zone adaptée pour venir directement en contact avec le fluide transporté ; **caractérisé en ce qu'**une couche mince, exempte de pore, fondue, solidifiée (1'c) est formée au niveau de la couche de surface circonférentielle interne dudit joint d'étanchéité pour empêcher une fuite osmotique dudit fluide hors de ladite zone, ladite couche exempte de pore, fondue, solidifiée étant formée uniquement au niveau de la surface circonférentielle interne (1c) du joint d'étanchéité, de telle manière que, sauf au niveau de ladite couche exempte de pore, fondue, solidifiée, les caractéristiques intrinsèques du polytétrafluoroéthylène poreux du joint d'étanchéité ne sont pas sacrifiées.

2. Un joint d'étanchéité annulaire tel que revendiqué à la revendication 1, **caractérisé en ce que** ladite couche fondue, solidifiée (1'c) comprend une partie centrale épaissie dans la direction de l'épaisseur du joint d'étanchéité (1) et des parties minces aux deux extrémités de la couche fondue, solidifiée en direction de chaque côté du joint d'étanchéité, laquelle partie épaissie est épaissie par rapport à l'épaisseur desdites parties minces, de sorte que lesdites parties minces peuvent être déformées de manière relativement facile par rapport à la partie épaissie.

3. Un procédé de fabrication d'un joint d'étanchéité annulaire (1) pour rendre étanche des conduites sanitaires transportant un fluide, ledit procédé comprenant le fait de former à partir de polytétrafluoroétylène poreux un joint d'étanchéité annulaire ayant deux côtés annulaires opposés adaptés pour mettre les conduites en contact étanche, et une surface circonférentielle interne (1c) définissant une zone adaptée pour venir directement en contact avec le fluide à transporter ; **caractérisé par** les étapes consistant à chauffer ladite surface circonférentielle interne (1c) à une température de 420 à 460°C pendant une période de 10 à 30 secondes par mise en contact de l'ensemble de la surface circonférentielle interne avec un élément métallique chauffé, de manière à faire fondre ladite surface circonférentielle interne, et permettre ensuite à ladite surface circonférentielle interne de se refroidir et se solidifier pour former une couche mince, exempte de pore, fondue, solidifiée (1'c) pour empêcher une fuite osmotique dudit fluide hors de ladite zone, de sorte que, sauf au niveau de ladite couche exempte de pore, fondue, solidifiée, les caractéristiques intrinsèques du polytétrafluoroéthylène poreux du joint d'étanchéité ne sont pas sacrifiées.
